# FASCICULE DE BREVET EUROPEEN

(11) **EP 3 969 363 B1**
(45) Date de publication et mention de la délivrance du brevet: **05.07.2023**
(21) Numéro de dépôt: 20768080.2
(22) Date de dépôt: 21.04.2020
(51) Int. Cl.: B64C 11/14, F02C 7/047

(54) **TURBOMACHINE COMPRENANT UN SYSTÈME DE DÉGIVRAGE DU CÔNE AMONT, ET PROCÉDÉ ASSOCIÉ**
TURBOMASCHINE MIT EINEM SYSTEM ZUR ENTEISUNG DES FRONT-KONUS UND ZUGEHÖRIGES VERFAHREN
TURBOMACHINE COMPRISING A SYSTEM FOR DEICING THE FRONT CONE, AND ASSOCIATED METHOD

(30) Priorité: 13.05.2019 FR 1904919
(43) Date de publication de la demande: 23.03.2022
(73) Titulaire: SAFRAN AIRCRAFT ENGINES, 75015 Paris (FR)
(72) Inventeur: RUSSMANN, Jacques, 77550 MOISSY-CRAMAYEL (FR); DUPAYS, Clément, 77550 MOISSY-CRAMAYEL (FR); BLAN, Jean-Marc, 77550 MOISSY-CRAMAYEL (FR)
(74) Mandataire: Cabinet Beau de Loménie
(86) Numéro de dépôt international: PCT/FR2020/050677
(87) Numéro de publication internationale: WO 2020/229745

(56) Documents cités:
- WO-A1-2014/143255
- FR-A1- 2 941 439
- US-A1- 2010 319 358
- US-A1- 2016 353 523

## Description

### Domaine Technique

Le présent exposé concerne le domaine des turbomachines, et concerne plus précisément un système de dégivrage d'un cône de turbomachine, et le procédé associé.

### Technique antérieure

Les turbomachines employées sur les aéronefs présentent communément un cône positionné à leur extrémité amont, au niveau de l'entrée d'air dans la turbomachine.

Cependant, lors d'un vol dans des conditions givrantes, il y a un risque d'accumulation de glace sur ce cône. Une telle accumulation de glace pose une double problématique. En effet, une accumulation trop importante de glace peut modifier de manière indésirable la masse et l'aérodynamisme du cône avant. Par ailleurs, en cas de libération soudaine d'une masse de glace accumulée sur le cône, la glace ainsi libérée peut être ingérée par la turbomachine, ce qui est susceptible de l'endommager.

Une solution connue consiste à prélever un flux d'air chaud dans la turbomachine, et de réaliser une circulation de ce flux d'air chaud dans une cavité interne du cône. On comprend cependant aisément qu'un tel prélèvement d'un flux d'air dans la turbomachine va impacter son rendement, et entrainer une augmentation de la consommation de carburant, ce qui est très pénalisant. Par ailleurs, le transfert d'un flux d'air entre des composants ayant une vitesse de rotation élevée pose une problématique pour assurer l'étanchéité entre ces composants.

Une solution alternative connue consiste à utiliser un système d'antigivrage électrique incluant des éléments chauffants situés sur la paroi interne du cône de la turbomachine et alimentés par une source de puissance électrique. Cette solution alternative présente toutefois plusieurs problématiques. Dans le cas d'un cône avant rotatif, le besoin de puissance thermique dissipée évolue en fonction de la vitesse d'arrivée de l'air sur le cône qui est liée au régime de rotation du fan et qui est donc également liée au régime de l'arbre basse pression. Ce besoin évolue dans une plage bornée par une valeur minimale et une valeur maximale. En effet, la puissance dissipée doit être suffisante pour assurer un niveau convenable d'antigivrage du cône avant. Cependant, la puissance dissipée ne doit pas conduire à un dépassement de la température maximale admissible des matériaux du cône avant pour éviter la perte des caractéristiques mécaniques de ces matériaux. La puissance électrique utilisée par le système d'antigivrage est préférentiellement prélevée directement sur le moteur afin d'assurer une autonomie du système vis-à-vis du réseau électrique avion. Cette puissance électrique est fournie par un générateur électrique lié mécaniquement à un arbre du turboréacteur, soit via une prise directe, soit via une boîte d'engrenages. L'état de l'art sur un turboréacteur consiste à prélever l'énergie sur une unique boîte d'engrenages connectée à un arbre haute pression. Ainsi, le besoin de puissance thermique dissipée évolue en fonction du régime de l'arbre basse pression du turboréacteur, alors que la puissance électrique disponible évolue en fonction du régime de l'arbre haute pression du turboréacteur. Or, les régimes de l'arbre basse pression et de l'arbre haute pression sont des régimes distincts qui évoluent indépendamment en fonction de la phase de vol, de l'environnement, de l'usure du turboréacteur et des conditions transitoires.

Une problématique est donc la faisabilité d'un mode de contrôle des éléments chauffants qui permette d'assurer à la fois un niveau convenable d'antigivrage du cône avant et le respect de la température maximale admissible des matériaux du cône quelle que soit l'excursion en régime des arbres haute et basse pression sur l'ensemble des points de fonctionnement du turboréacteur.

Le document WO 2014/143255 A1 décrit un système de dégivrage de l'art antérieur.

Le présent exposé vise ainsi à répondre au moins partiellement à ces problématiques.

### Exposé de l'invention

A cet effet, le présent exposé concerne une turbomachine comprenant un stator, un arbre haute pression, un arbre basse pression chacun mobile en rotation par rapport au stator, et un cône positionné à une extrémité amont de la turbomachine selon le sens d'écoulement de l'air et solidaire en rotation de l'arbre basse pression, la turbomachine comprenant un système de dégivrage dudit cône, comprenant des éléments chauffants résistifs positionnés sur une paroi interne dudit cône, un système de transfert d'énergie entre lesdits éléments chauffants résistifs et un stator de la turbomachine, le cône étant mobile en rotation par rapport au stator, une source de puissance électrique couplée à l'arbre haute pression et reliée au système de transfert d'énergie par un ensemble d'interrupteurs, un calculateur, le calculateur étant configuré de manière à définir une consigne de puissance de dégivrage du cône en fonction de données de température et de pression ambiante, et d'un régime de fonctionnement de l'arbre basse pression, et de manière à, en fonction de la puissance électrique fournie par la source de puissance électrique, définir un rapport cyclique de commutation de l'ensemble d'interrupteurs pour délivrer de la puissance électrique aux éléments chauffants résistifs.

Selon un exemple, le calculateur est configuré de manière à déterminer la puissance électrique fournie par la source de puissance électrique en fonction d'un régime de fonctionnement de l'arbre haute pression de la turbomachine.

Selon un exemple, la turbomachine comprend en outre un capteur de puissance positionné entre l'ensemble d'interrupteurs et le système de transfert d'énergie, adapté pour fournir une information au calculateur concernant la puissance délivrée au système de transfert d'énergie.

La turbomachine comprend alors typiquement un estimateur, configuré pour, en fonction du régime de fonctionnement de l'arbre haute pression et du rapport cyclique déterminé par le calculateur, déterminer une puissance théorique dissipée par les éléments chauffants résistifs, et une unité de diagnostic, configurée pour comparer la puissance théorique dissipée déterminée par le calculateur et la puissance délivrée au système de transfert d'énergie mesurée par le capteur de puissance, et pour, si l'écart entre la puissance théorique dissipée déterminée par le calculateur et la puissance délivrée au système de transfert d'énergie mesurée par le capteur de puissance est supérieur ou égal à une valeur seuil, délivrer un signal d'erreur à un utilisateur.

Selon un exemple, le système de transfert d'énergie est un transformateur tournant, comprenant un ensemble mobile solidaire en rotation du cône, et un ensemble fixe solidaire du stator.

Selon un exemple, la une source de puissance électrique est un alternateur à aimant permanent couplé à l'arbre haute pression.

Le présent exposé concerne également un aéronef comprenant une turbomachine telle que définie précédemment.

Le présent exposé concerne en outre un procédé de dégivrage d'un cône amont de turbomachine, dans lequel on définit une consigne de puissance de dégivrage requise en fonction de conditions ambiantes de température et de pression du cône et d'une vitesse de rotation du cône (qui correspond au régime d'un arbre basse pression de la turbomachine, le cône étant solidaire de l'arbre basse pression), on définit un rapport cyclique de commutation d'un ensemble d'interrupteurs en fonction de la puissance de dégivrage requise et en fonction de la puissance électrique fournie par une source de puissance électrique couplée à un arbre haute pression de la turbomachine, on pilote ledit ensemble d'interrupteurs au moyen du rapport cyclique de commutation de manière à délivrer une puissance électrique à des éléments chauffants résistifs positionnés dans le cône via un système de transfert d'énergie entre lesdits éléments chauffants résistifs et un stator de la turbomachine.

Selon un exemple, la puissance électrique fournie par la source de puissance électrique est déterminée en fonction de la vitesse de rotation de l'arbre haute pression de la turbomachine.

Selon un exemple, la puissance électrique fournie par la source de puissance électrique est déterminée au moyen d'un capteur de puissance fournissant une information concernant la puissance délivrée au système de transfert d'énergie.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue schématique d'une turbomachine selon un aspect de l'invention.
[Fig. 2] La figure 2 est une vue détaillé de la région amont de la turbomachine de la figure 1.
[Fig. 3] La figure 3 est une représentation schématique du fonctionnement d'un système selon un aspect de l'invention.
[Fig. 4] La figure 4 est une représentation schématique du fonctionnement d'un système selon une variante de l'invention.

Sur l'ensemble des figures, les éléments en commun sont repérés par des références numériques identiques.

### Description des modes de réalisation

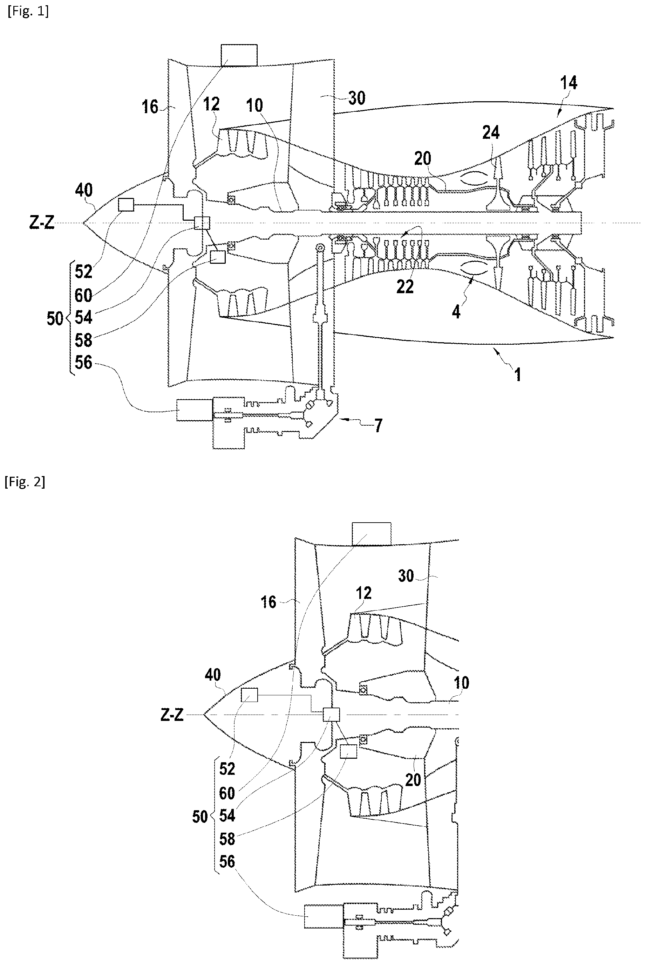

Les figures 1 et 2 présentent schématiquement une turbomachine selon un aspect de l'invention. On représente sur cette figure une partie de turbomachine 1 selon une vue en coupe. La turbomachine 1 telle que représentée comprend un arbre basse pression 10 s'étendant selon un axe principal Z-Z définissant une direction longitudinale de la turbomachine et reliant un compresseur basse pression 12 à une turbine basse pression 14, un arbre haute pression 20 s'étendant selon la direction longitudinale et un compresseur haute pression 22 à une turbine haute pression 24, une chambre de combustion 4 positionnée entre le compresseur haute pression 22 et la turbine haute pression 24.

L'arbre basse pression 10 est lié à la soufflante 16 ou « fan » selon l'appellation en langue anglaise communément utilisée, et présente un cône 40 positionné à son extrémité amont selon le sens d'écoulement de l'air. Comme indiqué en préambule, le présent exposé vise à proposer un système et un procédé pour la prévention d'une formation de glace sur ce cône 40.

La turbomachine comprend également un boitier d'accessoires 7 (ou « accessory gearbox » selon l'appellation en langue anglaise communément employée) qui est ici représenté schématiquement. On note que la position du boitier d'accessoires 7 peut également varier, et est arbitraire sur la figure 1. Le fonctionnement de ces différents composants est bien connu, et ne sera pas décrit plus en détail ici. On note par ailleurs que les dénominations « haute pression » et « basse pression » pour les composants d'une turbomachine sont communément admis par l'Homme du métier, et désignent non pas des valeurs absolues de pression, mais des valeurs relatives de pression, la pression du fluide au sein d'un composant basse pression étant inférieure à la pression du fluide au sein d'un composant haute pression similaire.

L'arbre basse pression 10 et l'arbre haute pression 20 sont montés tournant selon l'axe principal Z-Z par rapport à un carter 30, qui désigne de manière générale les éléments définissant l'enveloppe externe de la turbomachine 1 et via lesquels la turbomachine 1 est solidarisée à un aéronef, le carter 30 étant ainsi fixe par rapport à l'aéronef, par opposition à l'arbre haute pression 20 et à l'arbre basse pression 10 qui sont montés tournant selon l'axe principal Z-Z. Par fixe, on entend ici des éléments fixes au sens statorique, les éléments qualifiés de fixes étant également soumis à des efforts et contraintes entraînant une déformation.

La turbomachine 1 telle que représentée est munie d'un système de dégivrage 50 de son cône 40, que l'on représente schématiquement sur les figures.

Le système de dégivrage 50 tel que représenté comprend des éléments chauffants résistifs 52 positionnés dans le cône 40, un système de transfert d'énergie 54 entre les éléments chauffants résistifs 52 et un stator de la turbomachine 1, une source de puissance électrique 56 couplée à l'arbre haute pression 20 et reliée au système de transfert d'énergie 54 par un ensemble d'interrupteurs 58, et un calculateur 60.

Les éléments chauffants résistifs 52 sont typiquement des tapis chauffants résistifs positionnés sur une paroi interne du cône 40, de manière à permettre un réchauffement du cône 40 lorsque les éléments chauffants résistifs 52 sont mis activés et alimentés en énergie.

La source de puissance électrique 56 est typiquement un alternateur à aimant permanent couplé à l'arbre haute pression 20. La source de puissance électrique 56 est configurée de manière à délivrer une puissance électrique en fonction de la vitesse de rotation de l'arbre haute pression 20.

La source de puissance électrique 56 est reliée aux éléments chauffants résistifs 52 par l'intermédiaire du système de transfert d'énergie 54. Le système de transfert d'énergie 54 assure un transfert d'énergie entre un ensemble fixe (ou stator) de la turbomachine 1, et les éléments chauffants résistifs 52 qui sont positionnés dans le cône 40 tournant de la turbomachine 1. Le système de transfert d'énergie 54 comprend typiquement un transformateur tournant présentant un ensemble fixe (ou stator) solidaire du stator de la turbomachine 1, et un ensemble mobile (ou rotor) solidaire en rotation du cône 40. A titre d'exemple, le stator du système de transfert d'énergie 54 peut être fixé à un support de palier positionné dans une cavité de compresseur de la turbomachine 1.

L'ensemble d'interrupteurs 58 est interposé entre la source de puissance électrique 56 et le système de transfert d'énergie 54. Cet ensemble d'interrupteurs 58 est configuré de manière à piloter la puissance transmise au système de transfert d'énergie 54, et donc la puissance transmise aux éléments chauffants résistifs 52.

Le calculateur 60 pilote la puissance fournie aux éléments chauffants résistifs 52 en pilotant le rapport cyclique de commutation de l'ensemble d'interrupteurs 58. Plus généralement, le calculateur 60 détermine la puissance de dégivrage requise afin d'alimenter les éléments chauffants résistifs 52, et définit le rapport cyclique de commutation de l'ensemble d'interrupteurs 58 afin de fournir une puissance adaptée aux éléments chauffants résistifs 52.

La détermination de la puissance de dégivrage requise est réalisée par le calculateur 60 en fonction des conditions ambiantes de température T et de pression P, ainsi qu'en fonction du régime de l'arbre basse pression 10 désigné par N1. En effet, pour un cône 40 amont rotatif, le besoin de puissance pour réaliser un dégivrage du cône 40 dépend des conditions ambiantes et également de la vitesse d'écoulement de l'air sur le cône, qui est liée au régime de rotation de la soufflante 16, et donc au régime de rotation N1 de l'arbre basse pression 10.

Le calculateur 60 détermine ensuite le rapport cyclique de commutation de l'ensemble d'interrupteurs 58 afin de fournir une puissance adaptée aux éléments chauffants résistifs 52. Comme indiqué précédemment, la source de puissance électrique 56 est couplée à l'arbre haute pression 20 ; la puissance électrique générée dépend donc directement du régime de rotation de l'arbre haute pression 20 désigné par N2. Or, le régime de rotation de l'arbre haute pression 20 est dé-corrélé du régime de rotation de l'arbre basse pression 10. Le calculateur 60 est ainsi configuré de manière à, en fonction de la puissance électrique fournie par la source de puissance électrique 56 et de la puissance de dégivrage requise déterminer précédemment, définir un rapport cyclique de commutation de l'ensemble d'interrupteurs 58 pour délivrer de la puissance électrique aux éléments chauffants résistifs 52.

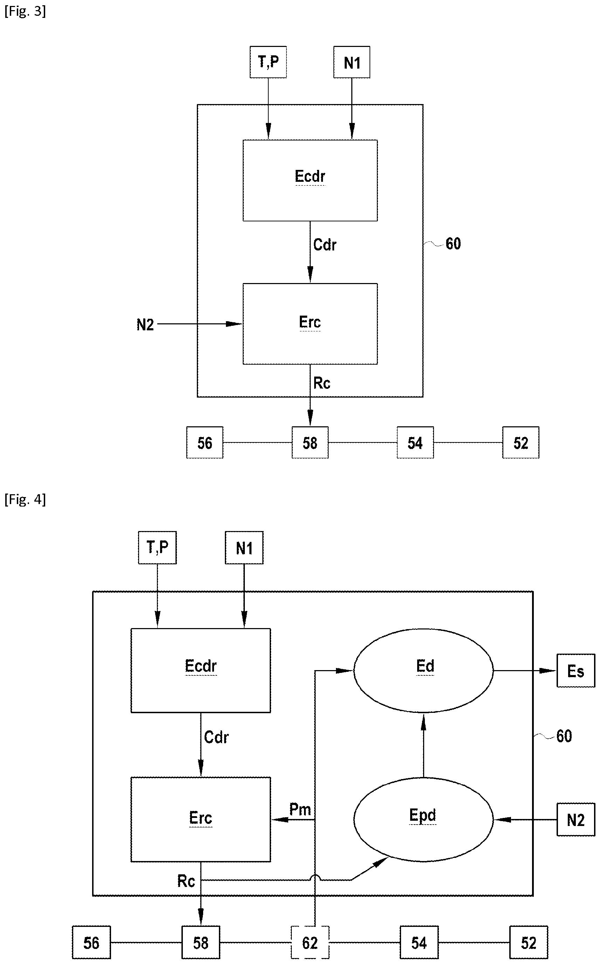

Le calculateur 60 peut ainsi déterminer la puissance électrique fournie par la source de puissance électrique 56 en fonction du régime N2 de rotation de l'arbre haute pression 20 de la turbomachine 1. Un tel fonctionnement est schématisé sur la figure 3.

La figure 3 représente ainsi schématiquement :
- T : valeur de température ambiante (ou température extérieure autour du cône 40).
- P : valeur de pression ambiante (ou pression extérieure autour du cône 40).
- N1 : régime de l'arbre basse pression.
- N2 : régime de l'arbre haute pression.
- Ecdr : le calcul de la puissance de dégivrage requise.
- Cdr : la consigne de puissance de dégivrage.
- Erc : le calcul du rapport cyclique.
- Rc : le rapport cyclique.

Le calculateur 60 peut ainsi adapter le rapport cyclique de commutation de l'ensemble d'interrupteurs 58 en fonction de la puissance délivrée par la source de puissance électrique 56, ce qui permet d'éviter une situation dans laquelle la puissance électrique fournie aux éléments chauffants résistifs 52 serait trop importante en raison d'un régime N2 de rotation de l'arbre haute pression 20 trop élevé. Plus précisément, une modélisation du système permet de définir une loi liant la puissance de dégivrage et le régime de l'arbre haute pression, permettant ainsi de définir le rapport cyclique pour les différentes phases de vol. La loi ainsi établie prend en compte les tolérances et variations notamment pour la source de puissance électrique 56 et les différents composants électriques, ainsi que pour les éléments chauffants résistifs 52.

Ce mode de réalisation permet ainsi d'assurer une adéquation entre la puissance électrique disponible et la puissance de dégivrage requise pour les différents modes de fonctionnement de la turbomachine, tout en évitant l'ajout de capteurs additionnels notamment montés sur des éléments tournants.

En variante, le système comprend un capteur de puissance 62 positionné en amont du système de transfert d'énergie 54, entre l'ensemble d'interrupteurs 58 et le système de transfert d'énergie 54. Ce capteur de puissance 62 mesure ainsi la puissance délivrée à l'entrée du système de transfert d'énergie 54. L'information ainsi mesurée est fournie au calculateur 60 pour le calcul du rapport cyclique au lieu d'utiliser le régime N2 de fonctionnement de l'arbre haute pression 20. Cette variante est représentée schématiquement sur la figure 4. Cette variante permet de s'affranchir des variations des caractéristiques des différents composants en amont du système de transfert d'énergie 54 pour la détermination du rapport cyclique, et permet donc d'améliorer la précision du système.

Le système peut également réaliser une fonction d'estimation et de diagnostic, ces fonctions pouvant être réalisées par le calculateur 60 ou par des composants dédiés.

On représente schématiquement ces fonctions optionnelles sur la figure 4, qui sont ici représentées comme étant réalisées par le calculateur 60.

Le calculateur 60 détermine alors, en fonction du rapport cyclique déterminé et du régime de l'arbre haute pression 20, une puissance de dégivrage théorique, c'est-à-dire un estimatif de la puissance de dégivrage fournie aux éléments chauffants résistifs 52 en fonction des caractéristique du système. La puissance de dégivrage théorique ainsi calculée est ensuite comparée avec la puissance mesurée par le capteur de puissance 62, afin de réaliser un diagnostic du système. Si l'écart entre la puissance de dégivrage théorique et la puissance mesurée est supérieur à une valeur seuil prédéterminée, alors un signal d'erreur est émis afin d'indiquer un dysfonctionnement à un utilisateur.

La figure 4 représente ainsi schématiquement :
- T : valeur de température ambiante.
- P : valeur de pression ambiante.
- N1 : régime de l'arbre basse pression.
- N2 : régime de l'arbre haute pression.
- Ecdr : le calcul de la puissance de dégivrage requise.
- Cdr : la consigne de puissance de dégivrage.
- Ere : le calcul du rapport cyclique.
- Rc : le rapport cyclique.
- Pm : puissance mesurée.
- Epd : estimation de la puissance de dégivrage.
- Ed : réalisation d'un diagnostic.
- Es : signal d'erreur.

Cette variante permet ainsi d'améliorer les performances en termes de précision du dégivrage, tout en limitant l'impact en pertes de fiabilité du système lié à l'introduction de capteurs dans un référentiel tournant au moyen d'une procédure de diagnostic permettant ainsi la détection et la prise en compte d'éventuelles pannes.

## Revendications

1. Turbomachine (1) comprenant un stator, un arbre haute pression (20), un arbre basse pression (10) chacun mobile en rotation par rapport au stator, et un cône (40) positionné à une extrémité amont de la turbomachine (1) selon le sens d'écoulement de l'air et solidaire en rotation de l'arbre basse pression (20), la turbomachine (1) comprenant un système de dégivrage dudit cône (40), comprenant :
- des éléments chauffants résistifs (52) positionnés sur une paroi interne dudit cône (40),
- un système de transfert d'énergie (54) entre lesdits éléments chauffants résistifs (52) et un stator de la turbomachine (1), le cône (40) étant mobile en rotation par rapport au stator,
- une source de puissance électrique (56) couplée à l'arbre haute pression (20) et reliée au système de transfert d'énergie (54) par un ensemble d'interrupteurs (58),
- un calculateur (60),
le calculateur (60) étant configuré de manière à :
- définir une consigne de puissance de dégivrage du cône (40) en fonction de données de température et de pression ambiante, et d'un régime de fonctionnement de l'arbre basse pression (20),
- en fonction de la puissance électrique fournie par la source de puissance électrique (56), définir un rapport cyclique de commutation de l'ensemble d'interrupteurs (58) pour délivrer de la puissance électrique aux éléments chauffants résistifs (52).

2. Turbomachine (1) selon la revendication 1, dans laquelle le calculateur (60) est configuré de manière à déterminer la puissance électrique fournie par la source de puissance électrique (56) en fonction d'un régime de fonctionnement de l'arbre haute pression (N2) de la turbomachine.

3. Turbomachine (1) selon la revendication 1, comprenant en outre un capteur de puissance (62) positionné entre l'ensemble d'interrupteurs (58) et le système de transfert d'énergie (54), adapté pour fournir une information au calculateur (60) concernant la puissance délivrée au système de transfert d'énergie (54).

4. Turbomachine (1) selon la revendication 3, comprenant en outre un estimateur, configuré pour, en fonction du régime de fonctionnement de l'arbre haute pression (N2) et du rapport cyclique déterminé par le calculateur (60), déterminer une puissance théorique dissipée par les éléments chauffants résistifs (52), et une unité de diagnostic, configurée pour comparer la puissance théorique dissipée déterminée par le calculateur (60) et la puissance délivrée au système de transfert d'énergie (54) mesurée par le capteur de puissance (62), et pour, si l'écart entre la puissance théorique dissipée déterminée par le calculateur (60) et la puissance délivrée au système de transfert d'énergie (54) mesurée par le capteur de puissance (62) est supérieur ou égal à une valeur seuil, délivrer un signal d'erreur à un utilisateur.

5. Turbomachine (1) selon l'une des revendications 1 à 4, dans laquelle le système de transfert d'énergie (54) est un transformateur tournant, comprenant un ensemble mobile solidaire en rotation du cône (40), et un ensemble fixe solidaire du stator.

6. Turbomachine (1) selon l'une des revendications 1 à 5, dans laquelle la une source de puissance électrique (56) est un alternateur à aimant permanent couplé à l'arbre haute pression (10).

7. Aéronef comprenant une turbomachine (1) selon l'une des revendications 1 à 6.

8. Procédé de dégivrage d'un cône (40) amont de turbomachine (1), dans lequel :
a- on définit une consigne de puissance de dégivrage requise en fonction de conditions ambiantes de température et de pression du cône (40) et du régime de fonctionnement d'un arbre basse pression (10) de la turbomachine (1), le cône (40) étant solidaire de l'arbre basse pression (10),
b- on définit un rapport cyclique de commutation d'un ensemble d'interrupteurs (58) en fonction de la puissance de dégivrage requise et en fonction de la puissance électrique fournie par une source de puissance électrique (56) couplée à un arbre haute pression (10) de la turbomachine (1),
c- on pilote ledit ensemble d'interrupteurs (58) au moyen du rapport cyclique de commutation de manière à délivrer une puissance électrique à des éléments chauffants résistifs (52) positionnés dans le cône (40) via un système de transfert d'énergie (54) entre lesdits éléments chauffants résistifs (52) et un stator de la turbomachine (1).

9. Procédé selon la revendication 8, dans lequel la puissance électrique fournie par la source de puissance électrique (56) est déterminée en fonction de la vitesse de rotation de l'arbre haute pression (10) de la turbomachine (1).

10. Procédé selon la revendication 8, dans lequel la puissance électrique fournie par la source de puissance électrique (56) est déterminée au moyen d'un capteur de puissance (62) fournissant une information concernant la puissance délivrée au système de transfert d'énergie (54).

## Patentansprüche

1. Turbomaschine (1), umfassend einen Stator, eine Hochdruckwelle (20), eine Niederdruckwelle (10), die jeweils in Bezug auf den Stator drehbeweglich sind, und einen Kegel (40), der an einem stromaufwärtigen Ende der Turbomaschine (1) in der Luftstromrichtung positioniert und drehfest mit der Niederdruckwelle (20) ist, wobei die Turbomaschine (1) ein System zur Enteisung des Kegels (40) umfasst, umfassend:
- Widerstandsheizelemente (52), die an einer Innenwand des Kegels (40) positioniert sind,
- ein Energieübertragungssystem (54) zwischen den Widerstandsheizelementen (52) und einem Stator der Turbomaschine (1), wobei der Kegel (40) in Bezug auf den Stator drehbeweglich ist,
- eine Quelle elektrischer Energie (56), die an die Hochdruckwelle (20) gekoppelt und mit dem Energieübertragungssystem (54) durch eine Reihe von Schaltern (58) verbunden ist,
- einen Computer (60),
wobei der Computer (60) ausgestaltet ist zum:
- Definieren eines Energiesollwertes zur Enteisung des Kegels (40) in Abhängigkeit von Umgebungstemperatur- und Umgebungsdruckdaten und einer Betriebsdrehzahl der Niederdruckwelle (20),
- in Abhängigkeit der elektrischen Energie, die durch die Quelle elektrischer Energie (56) bereitgestellt wird, Definieren eines Schaltarbeitszyklus der Reihe von Schaltern (58), um den Widerstandsheizelementen (52) elektrische Energie zuzuführen.

2. Turbomaschine (1) nach Anspruch 1, wobei der Computer (60) dazu ausgestaltet ist, die elektrische Energie, die durch die Quelle elektrischer Energie (56) bereitgestellt wird, in Abhängigkeit einer Betriebsdrehzahl der Hochdruckwelle (N2) der Turbomaschine zu bestimmen.

3. Turbomaschine (1) nach Anspruch 1, ferner umfassend einen Energiesensor (62), der zwischen der Reihe von Schaltern (58) und dem Energieübertragungssystem (54) positioniert ist und der dazu ausgelegt ist, dem Computer (60) eine Information bezüglich der an das Energieübertragungssystem (54) gelieferten Energie bereitzustellen.

4. Turbomaschine (1) nach Anspruch 3, ferner umfassend einen Schätzer, der dazu ausgestaltet ist, in Abhängigkeit der Betriebsdrehzahl der Hochdruckwelle (N2) und des Arbeitszyklus, der durch den Computer (60) bestimmt wird, eine theoretische Energie zu bestimmen, die durch die Widerstandsheizelemente (52) abgeführt wird, und eine Diagnoseeinheit, die dazu ausgestaltet ist, die abgeführte theoretische Energie, die durch den Computer (60) bestimmt wird, und die Energie, die dem Energieübertragungssystem (54) zugeführt wird, die durch den Energiesensor (62) gemessen wird, zu vergleichen, und, wenn die Abweichung zwischen der abgeführten theoretischen Energie, die durch den Computer (60) bestimmt wird, und der Energie, die dem Energieübertragungssystem (54) zugeführt wird und die durch den Energiesensor (62) gemessen wird, größer als oder gleich einem Schwellenwert ist, einem Benutzer ein Fehlersignal zuzuführen.

5. Turbomaschine (1) nach einem der Ansprüche 1 bis 4, wobei das Energieübertragungssystem (54) ein sich drehender Transformator ist, der eine bewegliche Einheit, die drehfest mit dem Kegel (40) ist, und eine feststehende Einheit, die fest mit dem Stator ist, umfasst.

6. Turbomaschine (1) nach einem der Ansprüche 1 bis 5, wobei die Quelle elektrischer Energie (56) ein Wechselstromgenerator mit einem Dauermagneten ist, der an die Hochdruckwelle (10) gekoppelt ist.

7. Luftfahrzeug, umfassend eine Turbomaschine (1) nach einem der Ansprüche 1 bis 6.

8. Verfahren zur Enteisung eines Kegels (40) stromaufwärts der Turbomaschine (1), wobei:
a- ein erforderlicher Energiesollwert zur Enteisung in Abhängigkeit von Umgebungstemperatur- und Umgebungsdruckbedingungen des Kegels (40) und der Betriebsdrehzahl einer Niederdruckwelle (10) der Turbomaschine (1) definiert wird, wobei der Kegel (40) fest mit der Niederdruckwelle (10) ist,
b- ein Schaltarbeitszyklus einer Reihe von Schaltern (58) in Abhängigkeit der erforderlichen Energie zur Enteisung und in Abhängigkeit der elektrischen Energie, die durch eine Quelle elektrischer Energie (56) bereitgestellt wird, die an eine Hochdruckwelle (10) der Turbomaschine (1) gekoppelt ist, definiert wird,
c- die Reihe von Schaltern (58) mittels des Schaltarbeitszyklus gesteuert wird, um Widerstandsheizelementen (52), die in dem Kegel (40) positioniert sind, eine elektrische Energie über ein Energieübertragungssystem (54) zwischen den Widerstandsheizelementen (52) und einem Stator der Turbomaschine (1) zuzuführen.

9. Verfahren nach Anspruch 8, wobei die elektrische Energie, die durch die Quelle elektrischer Energie (56) bereitgestellt wird, in Abhängigkeit der Drehgeschwindigkeit der Hochdruckwelle (10) der Turbomaschine (1) bestimmt wird.

10. Verfahren nach Anspruch 8, wobei die elektrische Energie, die durch die Quelle elektrischer Energie (56) bereitgestellt wird, mittels eines Energiesensors (62) bestimmt wird, der eine Information bezüglich der dem Energieübertragungssystem (54) zugeführten Energie bereitstellt.

## Claims

1. A turbomachine (1) comprising a stator, a high-pressure shaft (20), a low-pressure shaft (10) each movable in rotation with respect to the stator, and a cone (40) positioned at an upstream end of the turbomachine (1) in the direction of the air flow and secured in rotation to the low-pressure shaft (20), the turbomachine (1) comprising a system for deicing said cone (40), comprising:
- resistive heating elements (52) positioned on an internal wall of said cone (40),
- an energy transfer system (54) between said resistive heating elements (52) and a stator of the turbomachine (1), the cone (40) being movable in rotation with respect to the stator,
- an electrical power source (56) coupled to the high-pressure shaft (20) and connected to the energy transfer system (54) by a set of switches (58),
- a computer (60),
the computer (60) being configured so as to:
- define a power set point for deicing the cone (40) depending on ambient temperature and pressure data, and on an operating speed of the low-pressure shaft (20),
- depending on the electrical power supplied by the electrical power source (56), define a duty cycle of the set of switches (58) to deliver electrical power to the resistive heating elements (52).

2. The turbomachine (1) according to claim 1, wherein the computer (60) is configured so as to determine the electrical power supplied by the electrical power source (56) depending on an operating speed of the high-pressure shaft (N2) of the turbomachine.

3. The turbomachine (1) according to claim 1, also comprising a power sensor (62) positioned between the set of switches (58) and the energy transfer system (54), adapted to supply information to the computer (60) regarding the power delivered to the energy transfer system (54).

4. The turbomachine(1) according to claim 3, also comprising an estimator, configured, depending on the operating speed of the high-pressure shaft (N2) and on the duty cycle determined by the computer (60), to determine a theoretical power dissipated by the resistive heating elements (52), and a diagnostic unit, configured to compare the theoretical dissipated power determined by the computer (60) and the power delivered to the energy transfer system(54) measured by the power sensor (62), and, if the deviation between the theoretical dissipated power determined by the computer (60) and the power delivered to the energy transfer system (54) measured by the power sensor (62) is greater than or equal to a threshold value, to deliver an error signal to a user.

5. The turbomachine (1) according to one of claims 1 to 4, wherein the energy transfer system (54) is a rotating transformer, comprising a movable assembly secured in rotation to the cone (40), and a fixed assembly secured to the stator.

6. The turbomachine (1) according to one of claims 1 to 5, wherein the one electrical power source (56) is a permanent-magnet alternator coupled to the high-pressure shaft (10).

7. An aircraft comprising a turbomachine (1) according to one of claims 1 to 6.

8. A method for deicing an upstream cone (40) of a turbomachine (1) wherein:
a- a required deicing power set point is defined depending on the ambient temperature and pressure conditions of the cone (40) and the operating speed of a low-pressure shaft (10) of the turbomachine (1),the cone (40) being secured to the low-pressure shaft (10),
b- a duty cycle of a set of switches (58) is defined depending on the required deicing power and depending on the electrical power supplied by an electrical power source (56) coupled to a high-pressure shaft(10) of the turbomachine (1),
c- said set of switches (58) is controlled by means of the duty cycle so as to deliver electrical power to resistive heating elements (52) positioned in the cone (40) via an energy transfer system (54) between said resistive heating elements (52) and a stator of the turbomachine (1).

9. The method according to claim 8, wherein the electrical power supplied by the electrical power source (56) is determined depending on the rotation speed of the high-pressure shaft (10) of the turbomachine (1).

10. The method according to claim 8, wherein the electrical power supplied by the electrical power source (56) is determined by means of a power sensor (62) supplying information regarding the power delivered to the energy transfer system (54).
